# EUROPEAN PATENT APPLICATION

(11) **EP 1 974 801 A2**
(43) Date of publication of application: **01.10.2008**
(21) Application number: 08153282.2
(22) Date of filing: 26.03.2008
(51) Int. Cl.: B01D 63/08

(54) **Cassette-style filtration apparatus**

(30) Priority: 29.03.2007 US 920660 P; 26.03.2007 US 920085 P
(71) Applicant: MILLIPORE CORPORATION, Billerica Massachusetts 01821 (US)
(72) Inventor: Proulx, Stephen, Boxboro, MA 01719 (US); DeCoste, David, Chelmsford, MA 01824 (US); Muldoon, Joseph, Berlin, Massachusetts 10503, (US)
(74) Representative: Gambell, Derek

(57) **Abstract**

A filtration apparatus is provided wherein a filtration membrane is positioned by gaskets on feed plates and filtrate plates rather than being bonded thereto.

## Description

### CROSS-REFERENCE RELATED APPLICATIONS

This application claims the benefit of U.S. Provisional Patent Application No. 60/920,660, filed on March 29, 2007 and U.S. Provisional Patent Application No. 60/920,085, filed on March 26, 2007, the entire contents of which are incorporated by reference herein.

### FIELD OF THE INVENTION

This invention relates to a disposable membrane filtration apparatus for effecting filtration of a liquid composition wherein a feed liquid is introduced into the apparatus and a filtrate stream and, optionally a retentate stream are removed from the apparatus. More particularly, this invention relates to a disposable tangential flow membrane filtration apparatus or dead-ended membrane filtration apparatus that is formed and selectively sealed by utilizing gaskets integrally molded to filter plates that selectively seal the filtration membrane.

### BACKGROUND OF THE INVENTION

Prior to the present invention, liquids have been filtered within a plurality of filter modules that are stacked between manifolds or individually sealed to a manifold plate. Each module includes one or more filter layers separated by a thermoplastic plate with integrated gaskets to permit and distribute liquid feed flow into the apparatus as well as filtrate flow from the apparatus. Filtration within the module can be conducted as a tangential flow filtration (TFF) process wherein incoming feed liquid is flowed tangentially over a membrane surface to form a retentate and a filtrate. Alternatively, filtration can be conducted as a dead end mode otherwise identified as normal flow filtration (NFF) wherein all incoming feed liquid is passed through a membrane filter with retention of solids and other debris on the membrane filter. In this latter mode only a filtrate is recovered.

Currently, new membrane products are constrained by the design of existing devices. In order to achieve membrane areas sufficient for process scale normal flow filtration, membranes are pleated and assembled into cartridges. This limits the composition of new membranes to those materials which are flexible and thin, and restricts membranes having asymmetric pore structures known to improve filtration performance. Alternative filter designs including membrane cassettes and stacked disks rely on potting or thermal bonding of membranes to create seals, again limiting membrane composition to materials suited to thermal bonding or potting such as epoxies, urethanes or silicones. In the case of a tangential flow filtration apparatus, a filtrate stream is sealed from a feed stream and a retentate stream. Adhesives are undesirable since they have limited chemical compatibility, are a source of significant extractable species, introduce process control difficulties, impose bond strength limitations, impose use temperature limitations, and increase process cycle time. Solvent bonding is undesirable since solvents impose environmental issues and manufacturing process variability while potentially useful polymers are limited by their solvation characteristics. In addition, it has been proposed to modify the edges of the membrane layers by adding a polymeric thermoplastic sealing composition to a membrane layer surface. The polymeric thermoplastic sealing composition is then used to seal the membrane to an adjacent spacer layer. Since intrusion of the polymeric thermoplastic sealing composition into the membrane layer is limited by the small pores of the membrane, the strength of the seal between the sealing composition and the membrane is relatively low. Furthermore, processes such as those listed require extensive development and tend to be specific for each composition of membrane, pore size and thermoplastic used. Additionally, it may be desired to have thermoplastic or thermoset material forming the housing which is not possible to thermally bond to, or that epoxies or silicones do not adhere.

Thermal bonding membranes to thermoplastic plates is also well known in the art, however it requires that membranes be compatible with the thermoplastic filter plate. Membrane materials are currently made from diverse materials such as polytetrafluoroethylene (PTFE), polyvinylidene difluoride (PVDF), polyethersulfone (PES), cellulose and polyamides (nylon) which requires a great number of filter making processes and discourages the use of new, novel membrane materials.

Sealing with gaskets such as silicone and thermoplastic elastomers has been well known within the industry. However, it is usually applied to a single filtration layer housed within a single pair of plastic or stainless steel plates. If more filtration area is needed to affect a specific separation separate housings would be externally plumbed in parallel, a cumbersome, undesirable process, because of extra validation and cleaning.

U.S. Patent No. 5,429,742 discloses a filter cartridge comprising a thermoplastic frame into which are molded a plurality of filtration membranes. The thermoplastic frame is molded to provide fluid pathways that assure incoming fluid to be filtered will be passed through a membrane prior to removing filtered fluid from the filter cartridge. The frame is sufficiently thick so that fluid pathways to and from the membranes can be formed. The filter cartridge described requires the membrane to be insert molded, which limits housing construction to materials to those which are compatible for overmolding, and those which will form a seal with a filter layer.

U.S. Patent Application Publication No. 2004/0226875A1 discloses a filtration module wherein sealing to effect desired flow paths of feed, filtrate and optionally retentate is effected by heat sealing the periphery of spacer layers in a desired configuration. This design is constricted to only a few materials that can be worked in this manner.

Accordingly, it would be desirable to provide a multilayer filtration apparatus that utilizes a plurality of filtration elements wherein the layers are appropriately sealed without the use of adhesive or solvent bonding. In addition, it would be desirable to provide such a filtration apparatus which is not limited by the composition of the membrane or the filter plate. Moreover, it would be desirable to provide a tangential flow or a dead ended filtration apparatus containing a large number of filtration layers per unit volume of filtration apparatus which can be formed into a stack and which can be appropriately sealed to define liquid flow paths within the stack. In addition, it would be desirable to provide a tangential flow or a dead ended filtration apparatus containing a large number of filtration layers per volume of filtration apparatus which can be formed into a stack and which can be appropriately sealed to define liquid flow paths within the stack.

### SUMMARY OF THE INVENTION

According to the invention, there is provided a filtration apparatus comprising at least one filtration module having a feed plate, a filtration plate and a filtration membrane positioned between the feed plate and the filtration plate by gaskets on the feed plate and the filtrate plate.

Embodiments of the present invention provide a gasketed cassette-style filtration apparatus including filtration membranes. The membranes are fixed in position within the module by mating gaskets rather than being bonded to a feed plate or a filtrate plate. The filtration apparatus is formed from a stack of filtration modules. The filtration modules are formed of a feed plate, a filtrate plate, and a filtration membrane positioned between the plates. The feed plate and filtration plate are provided with gaskets which define the desired flow paths of feed, filtrate and optionally retentate. The gaskets can be positioned to define normal flow filtration (NFF) or tangential flow filtration (TFF). The filtration modules are formed by snap fitting the feed plate and filtrate plate together with the membrane positioned therebetween. A plurality of filtration modules then are stacked also via snap fit and secured between two manifolds which provide the desired fluid flow within the filtration apparatus. The manifolds are positioned and clamped between plates which fix the gaskets in place, retaining the seals against the pressure of fluid flow.

### BRIEF DESCRIPTION OF THE DRAWINGS

Figure 1a is a perspective view of a first surface of a TFF feed plate of this invention.
Figure 1b is a perspective view of a second surface of the TFF feed plate of Figure 1a, including a membrane.
Figure 2a is a perspective view of a first surface of the TFF filtrate plate of this invention which is positioned 180° with respect to the first surface of Figure 1a.
Figure 2b is a perspective view of a bottom surface of the TFF filtrate plate of Figure 2a, including a membrane.
Figure 3 is an exploded view of two TFF filtration modules of this invention, each comprising a feed plate and a filtrate plate.
Figure 4 is a perspective view of a TFF filtration apparatus of this invention.
Figure 5 is a side view of a snap fit arrangement useful in the present invention.
Figure 6 is a side view of an alternative snap fit arrangement useful in the present invention.
Figure 7 is a perspective view of a TFF apparatus of this invention.
Figure 8 is an exploded view of a NFF filtration module of this invention.
Figure 9a is a perspective view of a first surface of an NFF feed plate of this invention.
Figure 9b is a perspective view of a second surface of the NFF feed plate of Figure 9a.
Figure 10a is a perspective view of a first surface of an NFF filtrate plate of this invention.
Figure 10b is a perspective view of a second surface of the NFF filtrate plate of Figure 10a.
Figure 11 is a perspective view of a NFF apparatus of this invention.

### DESCRIPTION OF SPECIFIC EMODIMENTS

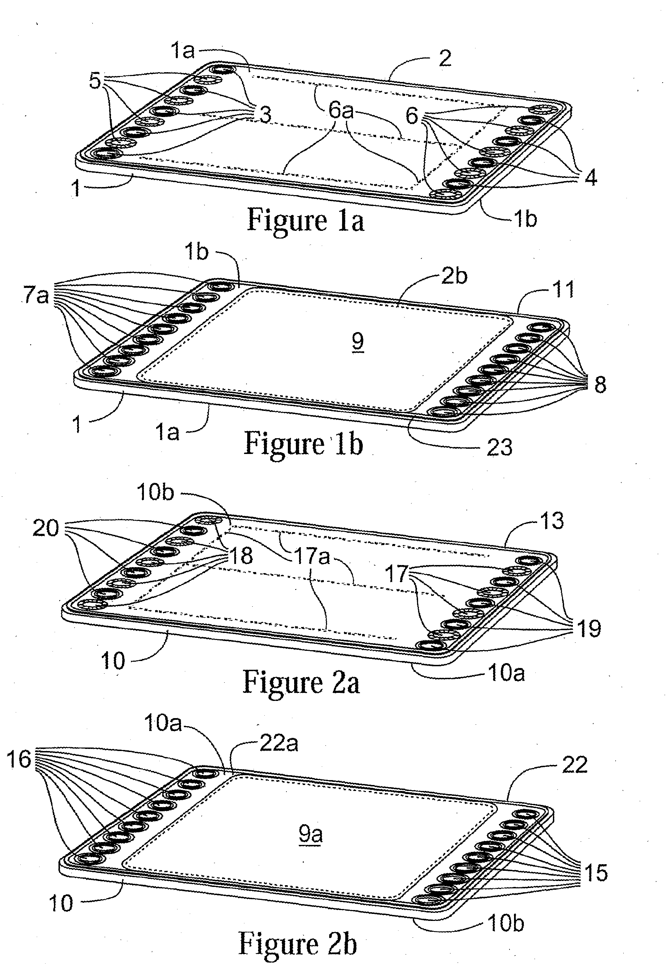

The feed plates and filtrate plates shown in Figures 1a, 1b, 2a and 2b have identical gasket configurations and ungasketed hole configurations. The desired fluid flow through adjacent feed and filtrate plates is achieved by positioning the surfaces having ungasketed holes in a manner which prevents mixing of filtrate with either feed or retentate.

Referring to Figures 1a and 1b, the two surfaces 1a and 1b of feed plate 1 are shown. As shown in Figure 1a, surface 1a includes an outer peripheral gasket 2. Each of the holes 3 and 4 are surrounded by gaskets. As shown in Figure 1b, surface 1b includes an outer peripheral gasket 11 and an inner peripheral gasket 2b (shown in dotted lines). Each of the holes 5 and 6 are ungasketed and open. Feed enters surface 1a through holes 5. Each of the holes 7a and 8 are gasketed. Perforations 6a are provided to permit fluid feed to pass through plate 1 and through filtration membrane 9. While perforations 6a are arranged in an E configuration, it is to be understood that they can be in any configuration so the feed flows through plate 1. Feed enters the top surface 1a, passes through perforations 6a and passes through filtration membrane 9 to emerge as filtrate. Unfiltered feed leaves surface 1a through holes 6 as retentate.

Referring to Figures 2a and 2b, the two surfaces 10a and 10b of filtrate plate 10 are shown. Surface 10a includes an outer peripheral gasket 22 and an inner peripheral gasket 22a. Each of the holes 15 and 16 are surrounded by gaskets. Surface 10b includes an outer peripheral gasket 13. Each of the holes 17 and 18 are open to fluid flow and are surrounded by a raised perforated section to provide support gaskets surrounding 16 and 15. This prevents seal breach under operating pressure. A similar raised, perforated section is provided on surface 10b to provide support for gasket 22a. Each of the holes 19 and 20 are surrounded by gaskets. Perforations 17a are provided through plate 10 to permit filtered fluid feed to pass from surface 10b to surface 10a. The gaskets 2b of Figure 1b and 22a of Figure 2b serve to seal the periphery of filtration membrane 9 when the two surfaces 1b and 1a are mated to each other. The two gaskets 11 and 22 serve to seal the periphery of feed plate 1 and filtrate plate 10. The gaskets surrounding holes 8 and 15 contact each other to form seals. The gaskets surrounding holes 7a and 16 contact each other to form seals.

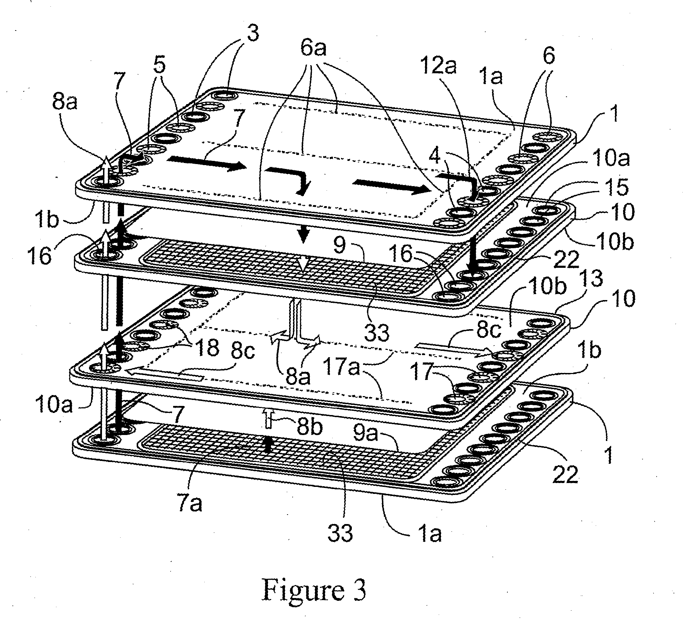

As shown in Figure 3, the feed plate 1 and filtrate plate 10 are joined together to surround and seal the filtration membrane 9 therebetween and to seal the periphery of feed plate 1 and the periphery of filtrate plate 10. The surfaces of the two plates 10 which mate to each other have the same configuration which is shown on the surface of plate 10 having the perforations 17a. The gasket seals surrounding holes 3 mate with gasket seals that surround holes 16. The gasket seals that surround holes 4 mate with gasket seals that surround holes 15. As shown in Figure 3, incoming fluid feed 7 passes through holes 5, across surface 1a, through perforations 6a, through membrane filter 9 (Figure 1b), (to become filtrate 8a). A second filtrate 8b is formed by passing feed 7a through porous surface 33. Porous surface 33 can be formed when molding plate 1. Filtrate 8a is mixed with filtrate 8b which passes through perforations 17a to form filtrate streams 8c. Retentate 12a passes through holes 6 and 15.

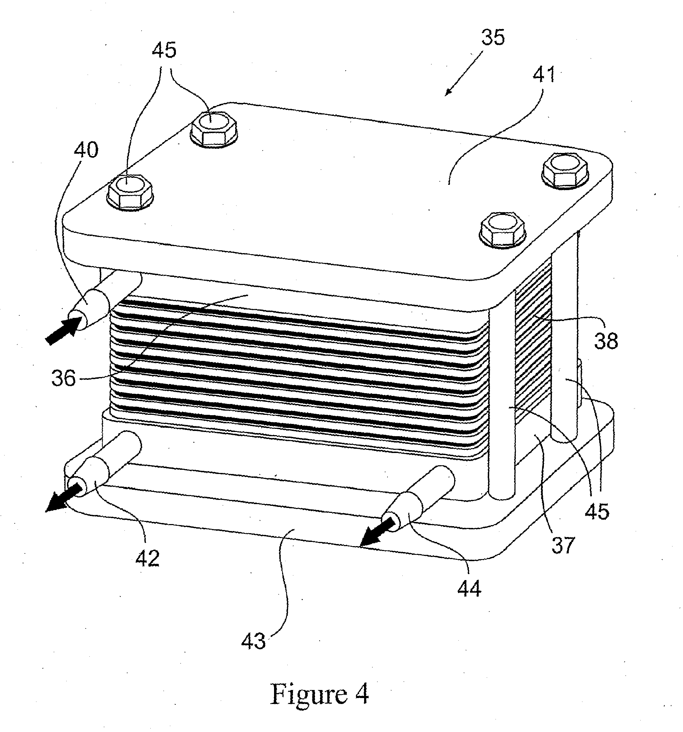

Referring to Figure 4, the TFF filtration apparatus 35 includes manifolds 36 and 37, a stack of filtration modules 38, a feed inlet 40, a filtrate outlet 42 and a retentate outlet 44. The filtration modules 38 and manifolds 36 and 37 are held between plates 41 and 43 by bolts 45.

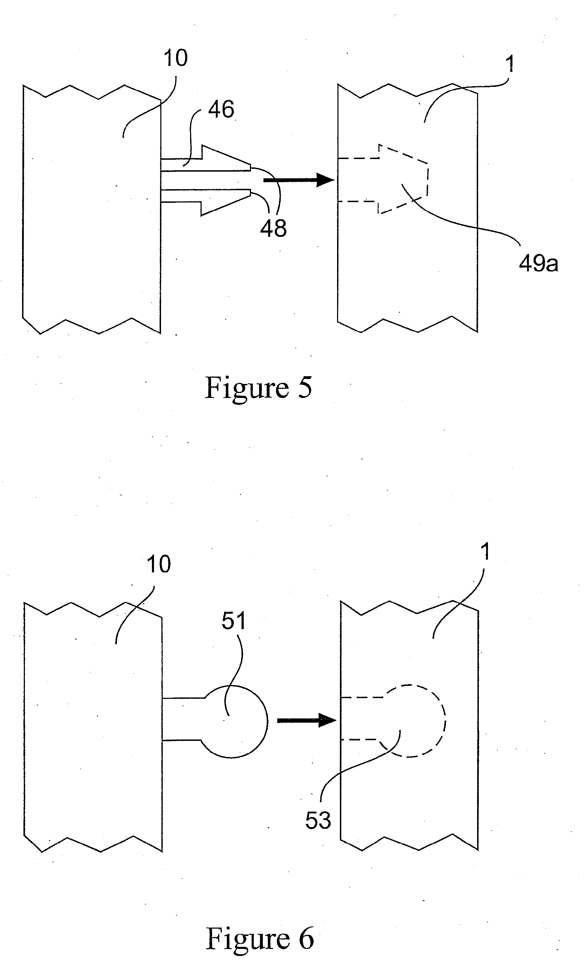

Referring to Figure 5, a snap fit connector is shown. A male connection element 46 comprising two flexible prongs 48 is attached to filtrate plate 10. The prongs 48 fit into female connector 49a in feed plate 1.

Referring to Figure 6, an alternative snap fit connector is shown. Male connection element 51 is attached to filtrate plate 10. The connection element 51 fits into female connector 53 in feed plate 1.

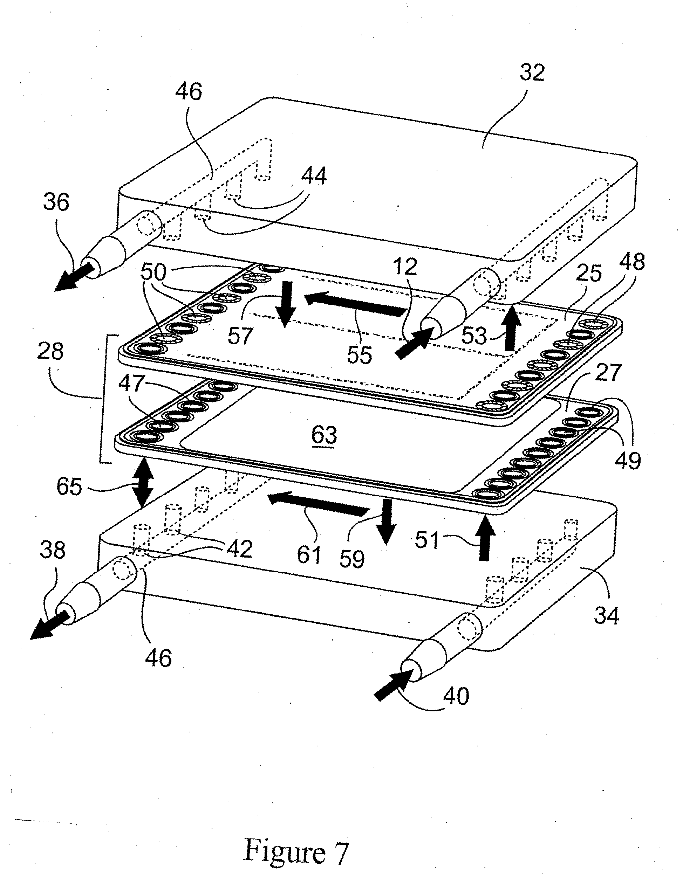

Referring to Figure 7, a TFF filtration module is shown. A filtration element 28 formed of feed plate 25 and filtrate plate 27 is positioned between manifold 32 and manifold 34. Manifold 32 is provided with feed inlet 12 and filtration outlet 36. Manifold 34 is provided with filtrate outlet 38 and feed inlet 40. One set of filtrate outlet means 42 is provided on the manifold 34 while a second set of filtrate outlet means 44 is provided on the manifold 32. The filtrate outlet means 42 and 44 are connected to filtrate outlets 36 and 38 by filtrate conduit paths 46. Holes 48 are not sealed by gaskets on the surface of feed plate 25 as shown. Holes 48 are sealed with gaskets on the surface of feed plate 25 not shown. Holes 49 are sealed with gaskets on the surface of filtrate plate 27 shown and gaskets on the surface of plate 27 not shown. Holes 50 of plate 25 are not sealed with gaskets on the surface of plate 25 shown and are sealed on the surface of plate 25 not shown. Holes 47 on plate 27 are sealed with gaskets on the surface of plate 25 shown and are not sealed with gaskets on the surface of plate 27 not shown. The configuration of gaskets on plates 25 and 27 assures the fluid flow occurs as represented sequentially by arrows 51, 53, 55, 57, 59, 61, 65, 36 and 38 so that all liquid feed passes through filtration membrane 63. Incoming feed are represented by arrows 12 and 40.

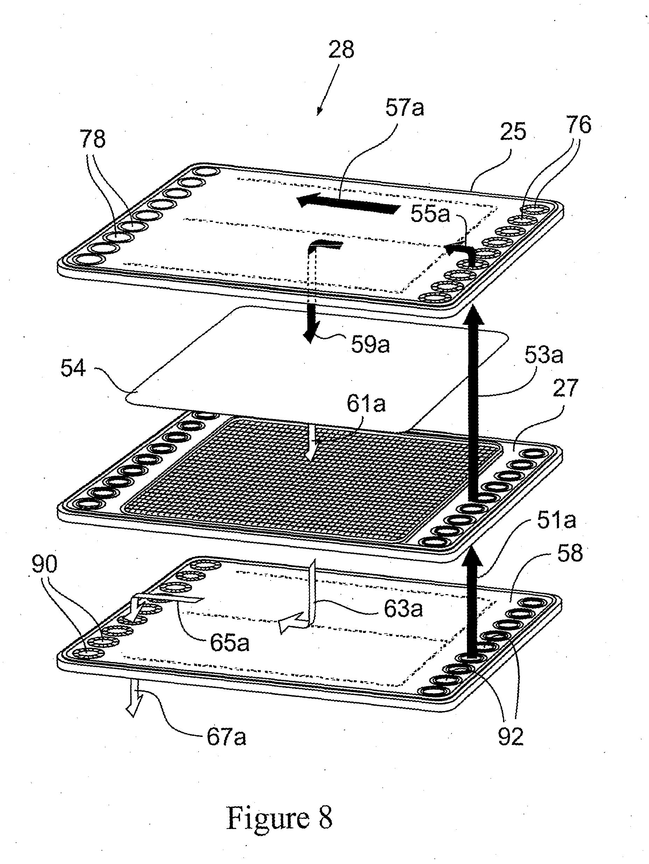

Referring to Figure 8, the filtration element 28 includes feed plate 25, a filtration membrane 54, a filtrate plate 27 and a second filtrate plate 58. The feed plate 25 and filtrate plate 27 are each provided with open holes 76 and 90 respectively and gasketed holes 78 and 92 respectively which assure that fluid flow occurs as represented sequentially by arrows 51a, 53a, 55a, 57a, 59a, 61a, 63a, 65a and 67a.

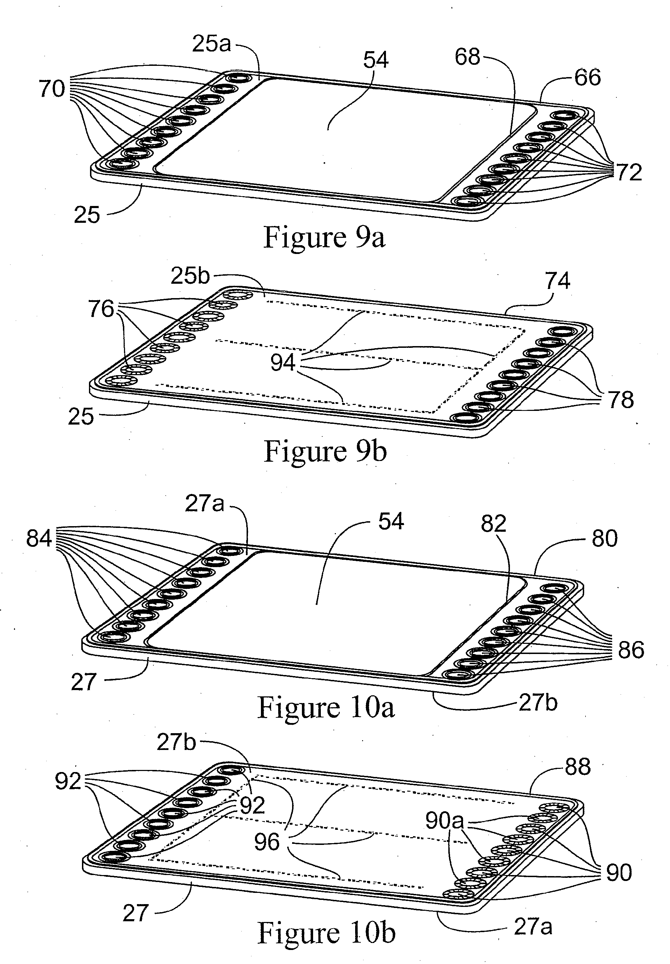

Referring to Figures 9a and 9b, the two surfaces 25a and 25b of feed plate 25 are shown. Surface 25a includes an outer peripheral gasket 66 and an inner peripheral gasket 68. Each of the holes 70 and 72 are surrounded by gaskets. Surface 25b includes an outer peripheral gasket 74. Each of the holes 76 is open to fluid flow. Each of the holes 78 are surrounded by gaskets. A membrane 54 is positioned on surface 25a and is surrounded by gaskets 66 and 68.

Referring to Figures 10a and 10b, the two surfaces 27a and 27b of feed plate 27 are shown. Surface 27a includes an outer peripheral gasket 80 and an inner peripheral gasket 82. Each of the holes 84 and 86 are surrounded by gaskets. Surface 27b includes an outer peripheral gasket 88. Each of the holes 90 is open to fluid flow. The membrane 54 is surrounded by gaskets 80 and 82. Each of the holes 92 are surrounded by gaskets.

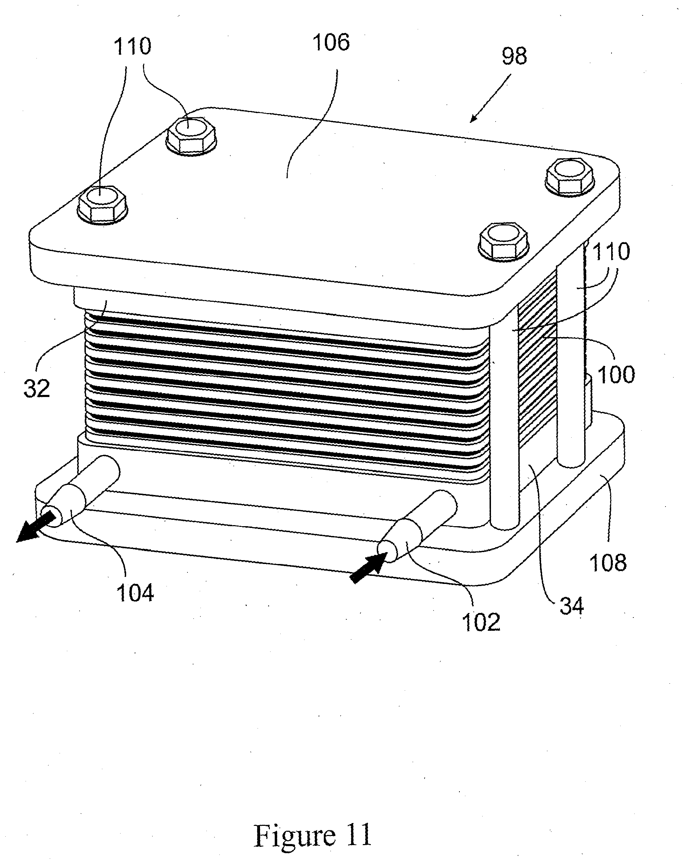

The fluid plate 25 and filtrate plate 27 of Figures 9a, 9b. 10a and 10b are joined together to surround and seal the filtration membrane 54 therebetween. Sealing is effected so that outer peripheral gaskets 66 and 80 mate to form a seal. Peripheral gaskets 68 and 82 also mate with filtration membrane 54 therebetween. The gaskets surrounding holes 70 mate with gaskets that surround holes 84. The gaskets that surround holes 72 mate with gasket seals that surround holes 86. Referring to Figure 11, the NFF filtration module 98 includes manifolds 32 and 34, a stack of filtration modules 100, a feed inlet 102 and a filtrate outlet 104. The filtration modules 100 and manifolds 32 and 34 are held between plates 106 and 108 by bolts 110.

The filtration apparatus of Figures 4 and 11 are clamped from manifold to manifold during use to apply pressure to the gaskets descried above. Upon completion of filtration, the clamps are released and the stack of filtration modules is discarded.

The filtration membrane can be formed of a single layer or multiple layers, including composite membranes.

The present invention may be used with ultrafiltration (UF), microfiltration filters, (MF), nanofiltration filters, and coarse or macrofiltration filters or the like.

Ultrafiltration (UF) filters, which may be used in this process, can be formed from the group including but not limited to polyethersulphones, including polysulphone, polyethersulfone, polyphenylsulphone and polyarylsulphones, polyvinylidene fluoride, and cellulose and its derivatives, such as nitrocellulose and regenerated cellulose. These filters typically include a support layer that is generally formed of a highly porous structure. Typical materials for these support layers include various non-woven materials such as spun bounded polyethylene or polypropylene, paper or glass or microporous materials formed of the same or different polymer as the filter itself. Alternatively, the support may be an openly porous, asymmetrical integral portion of the ultrafiltration filter that may be either formed with or without macrovoids. Such filters are well known in the art, and are commercially available from a variety of sources such as Millipore Corporation of Billerica, MA.

Suitable UF filters include regenerated cellulose or polysulfone filters such as YM^{™} or Biomax ® filters available from Millipore Corporation of Billerica, MA.

## Claims

1. A filtration apparatus comprising at least one filtration module having a feed plate, a filtration plate and a filtration membrane positioned between the feed plate and the filtration plate by gaskets on the feed plate and the filtrate plate.

2. The filtration apparatus of claim 1, wherein the apparatus has a plurality of the filtration modules.

3. The filtration apparatus of claim 1 or 2, wherein the apparatus has one or more fluid flow paths which effect tangential flow filtration within the filtration apparatus.

4. The filtration apparatus of claim 1 or 2, wherein the apparatus has one or more fluid flow paths which effect normal flow filtration within the filtration apparatus.

5. The filtration apparatus of any preceding claim, wherein the feed plate and the filtration plate are snap fit together with the membrane therebetween.

6. The filtration apparatus of claim 1, wherein the gaskets are molded in place on the plates.
